# EUROPEAN PATENT SPECIFICATION

(11) **EP 4 134 391 B1**
(45) Date of publication and mention of the grant of the patent: **06.05.2026**
(21) Application number: 20930464.1
(22) Date of filing: 09.04.2020
(51) Int. Cl.: C08G 65/40

(54) **METHOD FOR PRODUCING POLYETHER KETONE KETONE AND POLYETHER KETONE KETONE PRODUCED THEREBY**
VERFAHREN ZUR HERSTELLUNG VON POLYETHERKETONKETON UND DAMIT HERGESTELLTES POLYETHERKETONKETON
PROCÉDÉ DE PRODUCTION DE POLYÉTHERCÉTONECÉTONE ET POLYÉTHERCÉTONECÉTONE AINSI PRODUITE

(43) Date of publication of application: 15.02.2023
(73) Proprietor: Hanwha Solutions Corporation, Jung-gu Seoul 04541 (KR)
(72) Inventor: SIM, Yu Jin, Daejeon 34128 (KR); KIM, Min Sung, Daejeon 34128 (KR); KIM, Jae Heon, Daejeon 34128 (KR); AHN, Cho Hee, Daejeon 34128 (KR); JEONG, Kwang Seok, Daejeon 34128 (KR); CHO, Sang Hyun, Daejeon 34128 (KR)
(74) Representative: Klunker IP Patentanwälte PartG mbB
(86) International application number: PCT/KR2020/004810
(87) International publication number: WO 2021/206194

(56) References cited:
- EP-A1- 3 712 193
- WO-A1-2019/098744
- WO-A1-86/06389
- WO-A2-2011/004164
- WO-A2-2011/004164
- GB-A- 2 287 031
- JP-A- H0 243 220
- KR-A- 20190 056 128
- KR-A- 20200 091 202
- US-A- 4 716 211
- US-A- 4 891 167
- US-A1- 2019 040 189
- CHRISTOPHER M TIMPERLEY: "Best Synthetic Methods: Organophosphorus (Ⅴ) Chemistry", ELSEVIER, ISBN: 978-0-08-098212-0, article TIMPERLEY C M; RENARD PIERRE-YVES; GOMEZ CATHERINE, pages: 367 - 562, XP009531270, DOI: 10.1016/B978-0-08-098212-0.00004-2

## Description

### TECHNICAL FIELD

The present invention relates to a method for producing polyether ketone ketone, and more particularly, to a method for producing polyether ketone ketone and a polyether ketone ketone produced thereby, wherein a catalyst injection rate is controlled during production of the polyether ketone ketone to suppress scale formation, thereby improving the yield thereof.

### BACKGROUND ART

Polyether ketone ketone is a generic term for already known industrial resins, and includes polyether ketone, polyether ether ketone, polyether ketone ketone, and a copolymer in which polyether ketone and polyether ketone ketone are partially mixed.

Since polyether ketone ketone (PEKK) represented by the following chemical formula has high heat resistance and excellent strength, PEKK is widely used as engineering plastics. Engineering plastics are used in the fields of automobiles, aircraft, electrical and electronic equipment, machines, and the like, and their field of applications is gradually expanding.

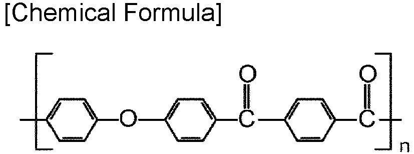

As the field of applications of engineering plastics is expanding, the usage environment thereof becomes more severe. Therefore, there is a need for polyether ketone ketone compounds that exhibit more improved physical properties. In addition, there is a need for a producing process with increased yield in order to reduce costs during polymerization reaction.

That is, productivity is reduced due to an operational problem in which scale easily occurs during polymerization of PEKK. In this regard, the related art of controlling catalyst injection rates in order to actually increase the yield of polymer resin is known.

US Patent Publication No. 4,891,167 discloses that a catalyst is injected at a constant rate, but is limited to polyaryl ether ketone (PAEK), and does not explicitly disclose a relationship between the catalyst injection rate and the yield.

Korean Patent Registration No. 0314176 discloses a catalyst injection device for olefin polymerization, which is similar in that a catalyst rate is controlled during polymerization of polymer, but the polymer is limited to polyolefin rather than PEKK.

U.S. Patent Publication No. 4,841,013 discloses a method for obtaining a product after polymerization through an additional process of breaking aggregated particles through a pulverization process after polymerization of polyaryl ether ketone (PAEK). However, there is a limitation in that it does not directly describe that the yield is improved through the suppression of scale formation.

US Patent No. 9,803,050 discloses a technique for controlling a particle size using a dispersing agent.

As non-patent publication, Chemical Engineering Science, (2011) Vol. 66, pp. 1189-1199 discloses that a polymer production rate also increases as a catalyst feed rate increases, but a polymer is disclosed as polypropylene rather than PEKK.

WO 2019/098774 A1 discloses a composition which is for treating hair, skin, or fiber and includes a cationic cellulose polymer, wherein the cationic cellulose polymer may be applied to various uses through adjustment of the molecular weight.

WO 2020/122366 A1 discloses a process for polymerizing PEKK which has improved resin flowability by post-addition of a capping agent during a polymerization process, and to PEKK polymerized thereby.

WO 2020/130289 A1 discloses a method for preparing a polyether ketone ketone (PEKK) mixture resin composition, and a PEKK prepared thereby.

US 4 891 167 A discloses crystalline block polymers and chain extended polymers containing blocks of crystalline poly(aryl ether ketones) and a method of producing them.

WO 86/06389 A1 discloses crystalline block polymers and chain extended polymers containing blocks of crystalline poly(aryl ether ketones).

WO 2011/004164 A2 discloses a method of preparing a poly (ether ketone ketone) consisting essentially of the repeat unit: -Ar-O-Ar-C(=O)-Ar-C(=O)- wherein each Ar is independently an aromatic moiety.

GB 2 287 031 A discloses a method of producing polyarylketones by electrophilic substitution using a dispersant for the polymer, wherein the dispersant comprises a polymer having first pendent groups which are substantially compatible with the reaction mixture but are substantially incompatible with the polymer and second pendent groups which comprise Lewis bases.

Finally, as non-patent publication, High Perform. Polym. (2014) Vol. 27, pp. 705-713 only discloses that a catalyst is used to produce PEKK and a catalyst feed ratio affects intrinsic viscosity, but does not disclose a catalyst injection rate.

Therefore, there is a need to develop a method for producing PEKK, which increases the yield by suppressing scale formation during polymerization of PEKK.

### [Citation List]

(Patent Literature 1) US 4891167
(Patent Literature 2) KR 0314176
(Patent Literature 3) US 4841013
(Patent Literature 4) US 9803050
(Non-Patent Literature 1) Chemical Engineering Science, (2011) Vol. 66, pp. 1189-1199
(Non-Patent Literature 2) High Perform. Polym. (2014) Vol. 27, pp. 705-713

### DESCRIPTION OF EMBODIMENTS

### TECHNICAL PROBLEM

The present invention aims to solve the above-described problems and ist set out in the appended set of claims.

An object of the present invention is to provide a method for producing polyether ketone ketone, wherein a catalyst injection rate is controlled to improve the yield and increase the particle size.

### SOLUTION TO PROBLEM

In order to achieve the above-described objects of the present invention and realize the characteristic effects of the present invention described below, the characteristic configuration of the present invention is as follows.

The method for producing polyether ketone ketone according to the present invention may include: (a) preparing a reaction solution by adding at least one selected from diphenyl oxide (DPO) and 1,4-bis(4-phenoxybenzoyl)benzene (EKKE) to terephthaloyl chloride (TPC), isophthaloyl chloride (IPC), and a liquid reaction medium in a reactor and simultaneously dissolving the same; (b) cooling the reaction solution and injecting a catalyst thereto; and (c), after the injecting of the catalyst, directly blowing an inert gas into the reaction solution and stirring the inert gas.

The catalyst may be at least one selected from aluminum chloride (AlCl₃), potassium carbonate (K₂CO₃), and iron(III) chloride (FeCl₃).

The catalyst is injected at a rate of 1 to 10 g/min.

A cooling temperature in the step (b) is -10 to -5°C.

In the step (c), an agitator (stirrer) having a plurality of agitating blades is rotated to disperse the injected inert gas.

At least two agitators are provided in the reactor to rotate in at least two directions to generate a vortex phenomenon.

A nozzle for directly blowing the inert gas into the reaction solution is formed in an upper or lower portion of the reactor, so that the inert gas is injected in multiple directions.

The inert gas is at least one selected from nitrogen, helium, neon, argon, and krypton.

The step (c) includes raising the temperature of the reactor to 80 to 100°C while stirring.

The method includes washing after the step (c) and rinsing with deionized water (DI water).

The method includes performing vacuum drying at 170 to 190°C after the rinsing.

The reaction solution includes at least one capping agent selected from benzoyl chloride, benzenesulfonyl chloride, 4-chlorobiphenyl, 4-phenoxybenzophenone, 4-(4-phenoxyphenoxy)benzophenone, and biphenyl 4-benzenesulfonylphenyl phenyl ether.

The liquid reaction medium is at least one solvent selected from o-dichlorobenzene (oDCB) and dichloromethane.

There is provided a polyether ketone ketone produced by the method described above.

The polyether ketone ketone has a yield of 90% or more. In this case, the polyether ketone ketone has a particle size of 250 to 2,000 µm.

### ADVANTAGEOUS EFFECTS OF DISCLOSURE

A method for producing polyether ketone ketone according to the present invention has an effect of increasing the yield of polyether ketone ketone by controlling a catalyst injection rate so as to suppress scale formation.

The method for producing polyether ketone ketone according to the present invention has an effect of maintaining inherent viscosity (IV) and obtaining the yield above 90%.

The method for producing polyether ketone ketone according to the present invention increases the particle size by controlling the catalyst injection rate so as to suppress scale formation, thereby obtaining an effect of reducing the possibility of dust scattering and facilitating operation.

The method for producing polyether ketone ketone according to the present invention has an effect of obtaining particles having various sizes at high yield by drying and additionally pulverizing PEKK of large particles obtained at high yield.

### BRIEF DESCRIPTION OF DRAWINGS

FIG. 1 is a photograph showing a particle shape (particle size of 250 to 500 µm) of Example produced according to the present invention.
FIG. 2 is a photograph showing a particle shape (particle size of 500 to 1,000 µm) of Example produced according to the present invention.
FIG. 3 is a photograph showing a particle shape (particle size of 20 to 100 µm) of Comparative Example.
FIGS. 4 and 5 are diagrams showing an apparatus capable of simultaneously flowing nitrogen gas into a reaction solution and stirring in a method for producing polyether ketone ketone according to the present invention.

### MODE OF DISCLOSURE

Reference is made to the accompanying drawing which shows, by way of illustration, specific embodiments in which the present invention may be practiced. The embodiments will be described in detail in such a manner that the present invention can be carried out by those of ordinary skill in the art. It should be understood that various embodiments of the present invention are different from each other, but need not be mutually exclusive. For example, certain shapes, structures, and features described herein may be implemented in other embodiments without departing from the scope of the present invention in connection with one embodiment. In addition, it will be understood that the locations or arrangement of individual components in the disclosed embodiments can be changed without departing from the scope of the present invention. Therefore, the following detailed description is not to be taken in a limiting sense, and the scope of the present invention is to be limited only by the appended claims and the entire scope of equivalents thereof, if properly explained. Like reference numerals in the drawing refer to the same or similar functions throughout the various aspects.

Hereinafter, preferred embodiments of the present invention will be described in detail with reference to the accompanying drawing, so that those of ordinary skill in the art can easily carry out the present invention.

Scale formation during polymerization of poly ether ketone ketone (PEKK) causes an operational problem. Therefore, in order to solve the resulting decrease in productivity, the present invention proposes a technique capable of increasing a particle size by controlling a catalyst injection rate and improving the yield by suppressing scale formation.

In the past, there was a problem in that a product had to be obtained through an additional process of controlling a particle size using a dispersing agent or breaking aggregated particles through a pulverization process after polymerization. However, the present invention provides a producing method according to a catalyst injection rate, which the catalyst injection rate is controlled to prevent aggregation of resin particles and prevent scale formation.

The method for producing polyether ketone ketone, capable of obtaining high molecular weight polyether ketone ketone at high yield, according to the present invention includes: (a) preparing a reaction solution by adding at least one selected from diphenyl oxide (DPO) and 1,4-bis(4-phenoxybenzoyl)benzene (EKKE) to terephthaloyl chloride (TPC), isophthaloyl chloride (IPC), and a liquid reaction medium in a reactor and simultaneously dissolving the same; (b) cooling the reaction solution and injecting a catalyst thereto; and (c), after the injecting of the catalyst, directly blowing an inert gas into the reaction solution and stirring the inert gas.

Polyether ketone ketone is a polymer produced by chain polymerization of terephthaloyl represented by chemical structure 1 and isophthaloyl represented by chemical structure 2, and characteristics of polyether ketone ketone are determined by the ratio of terephthaloyl to isophthaloyl. Terephthaloyl moiety is linear and rigid, and isophthaloyl moiety gives structural diversity due to its curved structure. Isophthaloyl affects flexibility, fluidity, and crystallization properties of polymer chains.

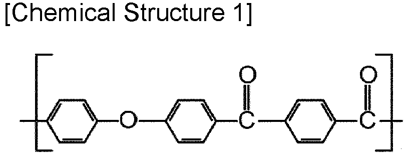

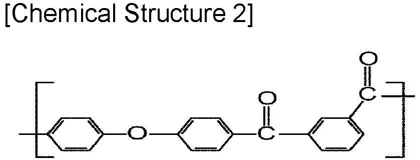

The catalyst may be at least one selected from aluminum chloride (AlCl₃), potassium carbonate (K₂CO₃), and iron(III) chloride (FeCl₃), but is not limited thereto, and may be any catalyst that is commonly used as a catalyst for Friedel-Crafts acylation polymerization.

Here, the catalyst is injected at a rate of 1 to 10 g/min or more. Preferably, the catalyst is injected at a rate of 1 to 3 g/min. More preferably, the catalyst is injected at a rate of 1 to 1.5 g/min. Since the catalyst is injected at a rate of 1 to 10 g/min, the particle size of the produced polyether ketone ketone may increase. In addition, the yield of polyether ketone ketone to be produced can be improved. In this case, the yield of polyether ketone ketone may be 90% or more.

In addition, the polyether ketone ketone may have a particle size of 250 to 2,000 µm.

The increase in particle size reduces the possibility of dust scattering during a product injection process, thereby facilitating operations. When a small particle size is requested according to product requirements, it is possible to reduce the particle size through additional pulverization after drying. This has an advantage that can control the particle size while maintaining the yield.

In the producing method according to the present invention, the catalyst is injected after the reaction solution is cooled. At this time, the temperature may vary depending on the catalyst, but is preferably -10 to -5°C.

The step (c) is characterized in that an agitator (stirrer) having a plurality of agitating blades is rotated to disperse the injected inert gas. At least two agitators may be provided in the reactor to rotate in at least two directions to cause a vortex phenomenon. The rotational shaft of the agitator may be provided to rotate by a predetermined angle alternately in the forward direction and the reverse direction. In addition, the agitating blade is provided to form a predetermined angle with the rotational shaft, thereby increasing the dispersion force of the composition in the reactor.

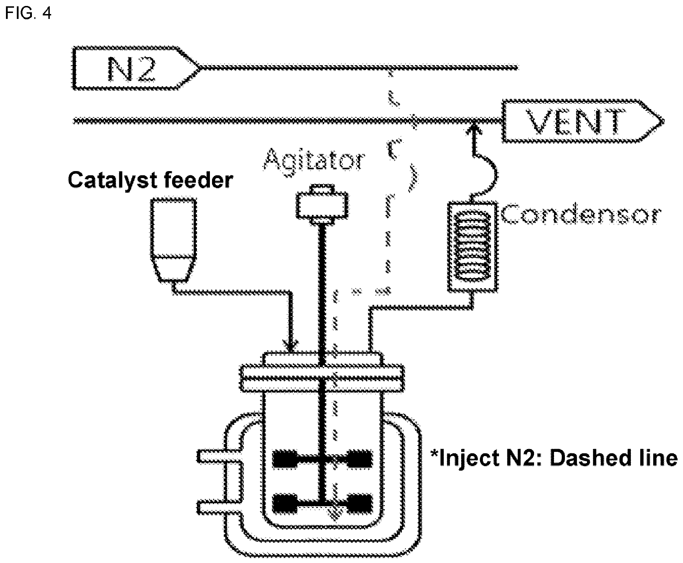

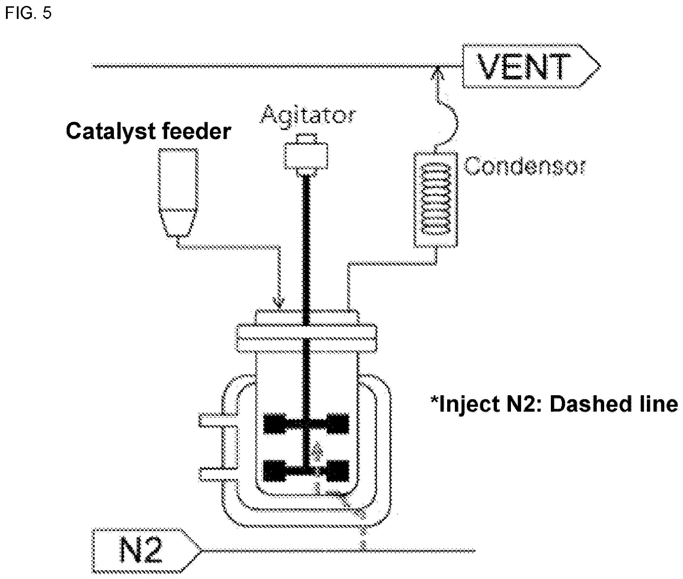

FIGS. 4 and 5 are diagrams showing an apparatus capable of simultaneously flowing nitrogen gas into a reaction solution and stirring in a method for producing polyether ketone ketone according to the present invention. Referring to FIGS. 4 and 5, in the method for producing PEKK according to the present invention, a nozzle for directly blowing the inert gas into the reaction solution is formed in the upper or lower portion of the reactor, so that the inert gas can be injected in multiple directions. Due to this, hydrochloric acid can be quickly and efficiently removed by the inert gas.

At this time, the inert gas is at least one selected from nitrogen, helium, neon, argon, and krypton. The inert gas may be used alone or in combination during the polymerization reaction.

After the inert gas is injected, the temperature of the reactor is raised to 80 to 100°C while stirring and PEKK is polymerized. The polymerization reaction according to the present invention may be carried out in various reactors. Preferably, the polymerization reaction may be carried out in a continuous stirred tank reactor (CSTR) or a loop reactor.

The method for producing PEKK according to the present invention further includes washing the polymerized PEKK and rinsing the polymerized PEKK with deionized water (DI water). The washing may be carried out with a solution of methanol (CH₃OH), hydrochloric acid, and sodium hydroxide (NaOH). Preferably, the washing may be carried out by methanol 3 times, hydrochloric acid once, and sodium hydroxide once. Here, the washing with hydrochloric acid and sodium hydroxide may be omitted.

After the washing, deionized water may be provided in the rinsing step. In this case, the rinsing may be preferably carried out 3 times.

After the rinsing, the method may further include obtaining PEKK polymerized resin powder by vacuum drying at 170 to 190°C.

When the three monomers are added to the liquid reaction medium and dissolved, a capping agent may be added and dissolved together. The capping agent is added to the polymerization medium to cap the polymer in at least one end of the polymer chain. This terminates the continuous extension of the chain and controls the molecular weight of the polymerized polymer. As a preferred capping agent, benzoyl chloride, benzenesulfonyl chloride, 4-chlorobiphenyl, 4-phenoxybenzophenone, 4-(4-phenoxyphenoxy)benzophenone, biphenyl 4-benzenesulfonylphenyl phenyl ether, and the like may be used.

In addition, the liquid reaction medium may be at least one solvent selected from o-dichlorobenzene (oDCB) and dichloromethane, but is not limited thereto, and may be any solve that is commonly used as a solvent for Friedel-Crafts acylation polymerization.

The polyether ketone ketone produced by the producing method described above exhibits improved physical properties, compared to polyether ketone ketone produced through the prior art. In addition, according to the present invention, the catalyst is injected at a rate of 1 to 10 g/min to prevent aggregation between resin particles and suppress scale formation, thereby obtaining high molecular weight polyether ketone ketone at high yield. Preferably, the yield of polyether ketone ketone may be 90% or more.

In addition, the polyether ketone ketone may have a particle size of 250 to 2,000 µm.

In the method for producing polyether ketone ketone and the polyether ketone ketone produced thereby according to the present invention, the catalyst is injected at a rate of 1 to 10 g/min to prevent aggregation between resin particles and suppress scale formation, thereby obtaining an effect of large particle size, and the value of inherent viscosity (IV) remains unchanged, thereby obtaining an effect that can high molecular weight polyether ketone ketone at high yield, preferably 90% or more.

Hereinafter, the structure and operation of the present invention will be described in more detail with reference to preferred examples of the present invention. However, these examples are shown by way of illustration and should not be construed as limiting the present invention in any sense.

Since contents not described herein can be sufficiently technically inferred by those of ordinary skill in the art, descriptions thereof will be omitted.

### < Examples>

### Example 1

26.6 g of EKKE, which was one selected from diphenyl oxide (DPO) and 1,4-bis(4-phenoxybenzoyl)benzene (EKKE) as monomers, 4.26 g of terephthaloyl chloride (TPC), 6.75 g of isophthaloyl chloride (IPC), and 0.48 g of benzoyl chloride as a capping agent were added to 750 g of o-dichlorobenzene (oDCB) as a reaction solvent in a reactor and were simultaneously dissolved, and the temperature of the reactor was lowered to -10 to -5°C. While maintaining the temperature of the solution constant at -10 to -5°C, 48 g of AlCl₃ as a catalyst was injected a rate of 1.1 g/min. After the injection of the catalyst is completed, the temperature of the reactor was raised to 90°C while stirring the solution at the same time as blowing of N2 into the solution and was maintained for 30 minutes to polymerize PEKK. The polymerized resin was washed with methanol 3 times, 1M hydrochloric acid, and 0.5M NaOH solution, was rinsed with DI water 3 times, and was vacuum-dried at 180°C to obtain PEKK polymerized resin.

### Example 2

A PEKK polymerized resin was obtained in the same manner as in Example 1, except that a catalyst was injected at a rate of 1.2 g/min.

### Example 3

A PEKK polymerized resin was obtained in the same manner as in Example 1, except that a catalyst was injected at a rate of 1.3 g/min.

### Comparative Example 1

A PEKK polymerized resin was obtained in the same manner as in Example 1, except that a catalyst was injected at a rate of 0.8 g/min.

### Comparative Example 2

A PEKK polymerized resin was obtained in the same manner as in Example 1, except that a catalyst was injected at a rate of 0.7 g/min.

### Comparative Example 3

A PEKK polymerized resin was obtained in the same manner as in Example 1, except that a catalyst was injected at a rate of 0.6 g/min.

### <Experimental Example> Inherent viscosity (IV) and yield analysis

The IV and the yield of Examples 1 to 3 produced according to the present invention and Comparative Examples 1 to 3 were measured. The results thereof are shown in Table 1 below.

**[Table 1]**

| Classification | Catalyst injection rate (g/min) | IV (dℓ/g) | Yield (%) |
|---|---|---|---|
| Example 1 | 1.1 | 0.9 | 93 |
| Example 2 | 1.2 | 0.9 | 96 |
| Example 3 | 1.3 | 0.8 | 92 |
| Comparative Example 1 | 0.8 | 0.9 | 66 |
| Comparative Example 2 | 0.7 | 0.9 | 59 |
| Comparative Example 3 | 0.6 | 1.0 | 62 |

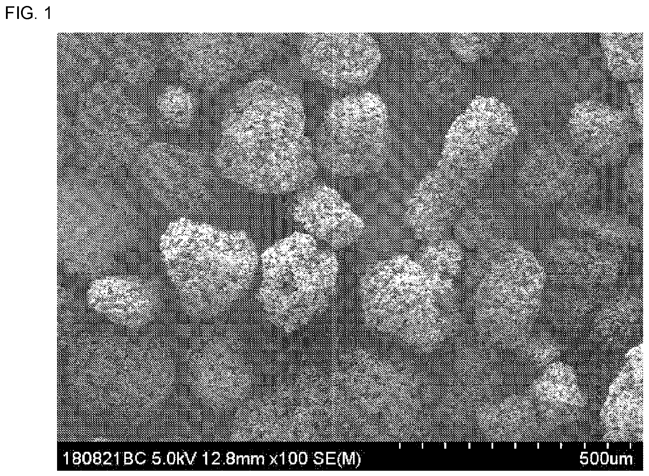

Referring to FIGS. 1 to 3, as shown in Table 1 above, it was confirmed that the PEKK of Examples 1 to 3 produced by injecting the catalyst at a rate of 1 to 10 g/min according to the present invention exhibited a high yield, compared to Comparative Examples 1 to 3. In particular, Example 2, which was produced by injecting the catalyst at a rate of 1.2 g/min, exhibited the highest yield. Therefore, it can be seen that a rate of 1.2 g/min is the most preferable rate.

As can be seen from the results of Comparative Examples 1 to 3, when the catalyst was injected at a rate of less than 1 g/min, the yield was remarkably low. Therefore, it can be seen that the ideal catalyst injection rate range of the present invention is 1 to 10 g/min. Due to this, it was confirmed that the yield was improved by suppressing scale formation when the catalyst was injected at a rate of 1 to 10 g/min according to the present invention.

In addition, in the method for producing polyether ketone ketone and the polyether ketone ketone produced thereby according to the present invention, when the catalyst was injected at a rate of 1 to 10 g/min, the value of inherent viscosity (IV) remains unchanged, thereby obtaining an effect that can high molecular weight polyether ketone ketone at high yield, preferably 90% or more.

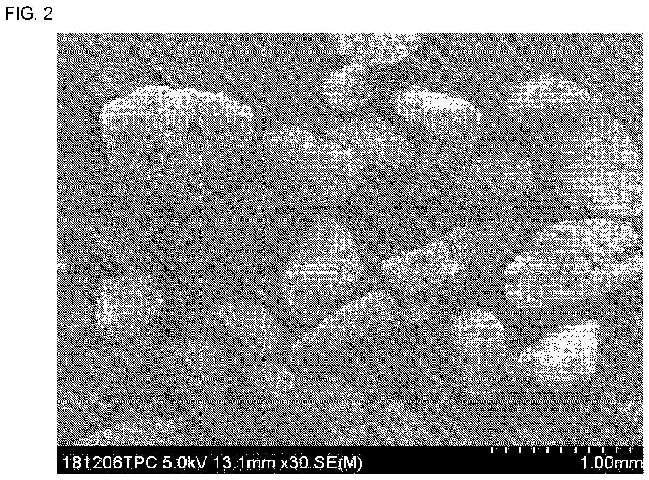

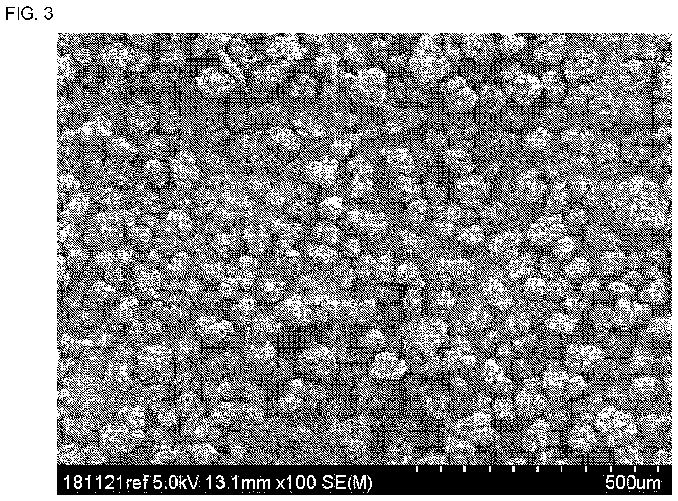

In addition, comparing the particle shapes of FIGS. 1 and 2 with the particle shape of FIG. 3, Examples 1 to 3 produced according to the present invention showed that the particle size of PEKK was increased. Therefore, it can be seen that the ideal catalyst injection rate range of the present invention is 1 to 10 g/min. Due to this, it was confirmed that, when the catalyst was injected at a rate of 1 to 10 g/min according to the present invention, there is an effect that the particle size was increased.

Therefore, the method for producing polyether ketone ketone and the polyether ketone ketone produced thereby according to the present invention have an effect of increasing the yield of polyether ketone ketone by controlling the catalyst injection rate so as to suppress scale formation.

In addition, in the method for producing polyether ketone ketone and the polyether ketone ketone produced thereby according to the present invention, when the catalyst was injected at a rate of 1 to 10 g/min, the value of inherent viscosity (IV) remains unchanged to prevent aggregation between resin particles and suppress scale formation, thereby obtaining an effect that can high molecular weight polyether ketone ketone at high yield, preferably 90% or more.

In addition, in the method for producing polyether ketone ketone and the polyether ketone ketone produced thereby according to the present invention, the particle size is increased by controlling the catalyst injection rate so as to suppress scale formation, thereby obtaining an effect of reducing the possibility of dust scattering and facilitating operations.

The method for producing polyether ketone ketone according to the present invention has an effect of obtaining particles having various sizes at high yield by drying and additionally pulverizing PEKK of large particles obtained at high yield.

While the present invention has been described by particular matters such as specific components and limited embodiments and drawings, this is provided only for helping the comprehensive understanding of the present invention. The present invention is not limited to the above-described embodiments, and it will be understood by those of ordinary skill in the art that various modifications and variations can be made thereto without departing from the scope of the present invention.

Therefore, it will be understood that the scope of the present invention is limited to the above-described embodiments and the claims.

## Claims

1. A method for producing polyether ketone ketone, which obtains high molecular weight polyether ketone ketone at high yield, the method comprising:
(a) preparing a reaction solution by adding at least one selected from diphenyl oxide (DPO) and 1,4-bis(4-phenoxybenzoyl)benzene (EKKE) to terephthaloyl chloride (TPC), isophthaloyl chloride (IPC), and a liquid reaction medium in a reactor and simultaneously dissolving the same;
(b) cooling the reaction solution and injecting a catalyst thereto; and
(c) after the injecting of the catalyst, directly blowing an inert gas into the reaction solution and stirring the inert gas,
**characterized in that** the catalyst is injected at a rate of 1 to 10 g/min.

2. The method of claim 1, wherein the catalyst is at least one selected from aluminum chloride (AlCl₃), potassium carbonate (K₂CO₃), and iron(III) chloride (FeCl₃).

3. The method of claim 1, wherein a cooling temperature in the step (b) is -10 to -5°C.

4. The method of claim 1, wherein a nozzle for directly blowing the inert gas into the reaction solution is formed in an upper or lower portion of the reactor, so that the inert gas is injected in multiple directions.

5. The method of claim 1, wherein the inert gas is at least one selected from nitrogen, helium, neon, argon, and krypton.

6. The method of claim 1, wherein the step (c) comprises raising the temperature of the reactor to 80 to 100°C while stirring.

7. The method of claim 1, comprising washing after the step (c) and rinsing with deionized water (DI water).

8. The method of claim 7, further comprising performing vacuum drying at 170 to 190°C after the rinsing.

9. The method of claim 1, wherein the reaction solution comprises at least one capping agent selected from benzoyl chloride, benzenesulfonyl chloride, 4-chlorobiphenyl, 4-phenoxybenzophenone, 4-(4-phenoxyphenoxy)benzophenone, and biphenyl 4-benzenesulfonylphenyl phenyl ether.

10. The method of claim 1, wherein the liquid reaction medium is at least one solvent selected from o-dichlorobenzene (oDCB) and dichloromethane.

## Patentansprüche

1. Verfahren zur Herstellung von Polyetherketonketon, bei dem Polyetherketonketon mit hohem Molekulargewicht in hoher Ausbeute erhalten wird, wobei das Verfahren umfasst:
(a) Herstellen einer Reaktionslösung durch Zugeben von mindestens einer Verbindung, ausgewählt aus Diphenyloxid (DPO) und 1,4-Bis(4-phenoxybenzoyl)benzol (EKKE), zu Terephthaloylchlorid (TPC), Isophthaloylchlorid (IPC) und einem flüssigen Reaktionsmedium in einem Reaktor und gleichzeitiges Auflösen derselben;
(b) Kühlen der Reaktionslösung und Einbringen eines Katalysators in diese; und
(c) nach dem Einbringen des Katalysators direktes Einblasen eines Inertgases in die Reaktionslösung und Rühren des Inertgases,
**dadurch gekennzeichnet, dass** der Katalysator mit einer Geschwindigkeit von 1 bis 10 g/min eingebracht wird.

2. Verfahren nach Anspruch 1, wobei der Katalysator mindestens einer, ausgewählt aus Aluminiumchlorid (AlCl₃), Kaliumcarbonat (K₂CO₃) und Eisen(III)-chlorid (FeCl₃) ist.

3. Verfahren nach Anspruch 1, wobei eine Kühltemperatur in Schritt (b) -10 bis -5 °C beträgt.

4. Verfahren nach Anspruch 1, wobei eine Düse zum direkten Einblasen des Inertgases in die Reaktionslösung in einem oberen oder unteren Abschnitt des Reaktors ausgebildet ist, so dass das Inertgas in mehrere Richtungen eingebracht wird.

5. Verfahren nach Anspruch 1, wobei das Inertgas mindestens eines, ausgewählt aus Stickstoff, Helium, Neon, Argon und Krypton ist.

6. Verfahren nach Anspruch 1, wobei der Schritt (c) ein Erhöhen der Temperatur des Reaktors auf 80 bis 100 °C unter Rühren umfasst.

7. Verfahren nach Anspruch 1, umfassend ein Waschen nach dem Schritt (c) und Spülen mit entionisiertem Wasser (DI-Wasser).

8. Verfahren nach Anspruch 7, ferner umfassend ein Durchführen einer Vakuumtrocknung bei 170 bis 190 °C nach dem Spülen.

9. Verfahren nach Anspruch 1, wobei die Reaktionslösung mindestens ein Capping-Mittel umfasst, das aus Benzoylchlorid, Benzolsulfonylchlorid, 4-Chlorbiphenyl, 4-Phenoxybenzophenon, 4-(4-Phenoxyphenoxy)benzophenon und Biphenyl-4-benzolsulfonylphenyl-phenylether ausgewählt ist.

10. Verfahren nach Anspruch 1, wobei das flüssige Reaktionsmedium mindestens ein Lösungsmittel ist, ausgewählt aus o-Dichlorbenzol (oDCB) und Dichlormethan.

## Revendications

1. Procédé destiné à produire du polyéther-cétone-cétone, lequel obtient du polyéther-cétone-cétone de poids moléculaire élevé à haut rendement, le procédé comprenant les étapes suivantes :
(a) préparer une solution réactionnelle en ajoutant au moins un élément sélectionné parmi l'oxyde de phényle (DPO) et le 1,4-bis(4-phénoxybenzoyl)benzène (EKKE) dans du chlorure de téréphtaloyle (TPC), du bichlorure de métaphtaloyle (IPC), et un milieu réactionnel liquide dans un réacteur, en dissolvant ceux-ci simultanément ;
(b) refroidir la solution réactionnelle, et injecter un catalyseur dans celle-ci, et
(c) après injection du catalyseur, souffler directement un gaz inerte dans la solution réactionnelle, et agiter le gaz inerte,
**caractérisé en ce que** le catalyseur est injecté avec un débit de 1 à 10 g/min.

2. Procédé selon la revendication 1, dans lequel le catalyseur est au moins un élément sélectionné parmi le chlorure d'aluminium (AlCl₃), le carbonate de potassium (K₂CO₃), et du chlorure de fer (III) (FeCl₃).

3. Procédé selon la revendication 1, dans lequel une température de refroidissement à l'étape (b) s'étend de -10 à -5 °C.

4. Procédé selon la revendication 1, dans lequel une buse pour le soufflage direct du gaz inerte dans la solution réactionnelle est formée dans une portion supérieure ou inférieure du réacteur, de sorte que le gaz inerte est injecté dans de multiple directions.

5. Procédé selon la revendication 1, dans lequel le gaz inerte est au moins un élément sélectionné parmi l'azote, l'hélium, le néon l'argon, et le krypton.

6. Procédé selon la revendication 1, dans lequel l'étape (c) comprend l'élévation de la température du réacteur de 80 à 100 °C sous agitation.

7. Procédé selon la revendication 1, comprenant une étape de lavage après l'étape (c), et un rinçage avec de l'eau désionisée (eau DI).

8. Procédé selon la revendication 7, comprenant en outre la réalisation d'un séchage sous vide à 170 jusqu'à 190 °C après rinçage.

9. Procédé selon la revendication 1, dans lequel la solution réactionnelle comprend au moins un agent de coiffage sélectionné par le chlorure de benzoyle, le chlorure de benzènesulfonyle, le 4-chlorobiphényle, la 4-phénoxybenzophénone, la 4-(4-phénoxyphénoxy)benzophénone, et le diphényl-4-benzènesulfonylphényl-phényl-éther.

10. Procédé selon la revendication 1, dans lequel le milieu réactionnel liquide est au moins un solvant sélectionné parmi le o-dichlorobenzène (oDCB) ou le dichlorométhane.
